# EUROPÄISCHE PATENTSCHRIFT

(11) **EP 1 687 103 B1**
(45) Veröffentlichungstag und Bekanntmachung des Hinweises auf die Patenterteilung: **04.06.2008**
(21) Anmeldenummer: 05701260.1
(22) Anmeldetag: 31.01.2005
(51) Int. Cl.: B09B 3/00, B03B 9/06

(54) **VORRICHTUNG ZUR VOR-ORT-ENTSORGUNG VON HYGIENISCHEM MÜLL, INSBESONDERE VON INKONTINENZ-ARTIKELN UND VERFAHREN HIERFÜR**
DEVICE FOR THE IN SITU DISPOSAL OF SANITARY WASTE, ESPECIALLY INCONTINENCE-RELATED ITEMS, AND CORRESPONDING METHOD
DISPOSITIF POUR ELIMINER SUR PLACE DES DECHETS D'ARTICLES HYGIENIQUES, EN PARTICULIER D'ARTICLES D'INCONTINENCE, ET PROCEDE CORRESPONDANT

(30) Priorität: 02.12.2004 DE 202004018714 U; 06.01.2005 DE 202005000148 U
(43) Veröffentlichungstag der Anmeldung: 09.08.2006
(73) Patentinhaber: Teeuwen Präzisions GmbH, 41748 Viersen (DE)
(72) Erfinder: HEIDEL, Werner, 41749 Viersen (DE)
(74) Vertreter: Richter, Joachim
(86) Internationale Anmeldenummer: PCT/EP2005/000904
(87) Internationale Veröffentlichungsnummer: WO 2006/058563

(56) Entgegenhaltungen:
- WO-A-03/009942
- US-A- 5 232 584

## Beschreibung

Die Erfindung betrifft eine Vorrichtung zur Vor-Ort-Entsorgung von Hygienemüll gemäß dem Oberbegriff des Anspruches 1 sowie ein Verfahren hierfür.

Durch die DE 691 24 107 D ist ein Verfahren zur Behandlung von absorbierenden sanitären Papierprodukten zur Auftrennung derartiger Produkte in ihre Komponenten bzw. in Komponenten davon bekannt, die eine Form aufweisen, welche zum Rezyklieren bzw. zur Wiederverwendung geeignet ist, wobei die Produkte zumindest Kunststoff-, Zellulose- und superabsorbierende Polymer-("SAP"-) Feststofffraktionen umfassen, wobei das Verfahren folgende Schritte umfasst: Behandeln der Produkte in zerkleinerter Form in einem Bad einer wässrigen Lösung, um lösliches Material zu lösen und das SAP so zu behandeln, dass dessen Quellen in wässrigen Medien gehemmt, verhindert oder umgekehrt wird und Abtrennen der Lösung von löslichem Material von zumindest einer der Feststofffraktionen.

Die zur Durchführung dieses Verfahrens verwendete Vorrichtung umfasst eine drehbare und kippbare, zylindrische Trommel mit einem ersten und einem zweiten Ende, die eine wässrige Lösung beinhalten bzw. aufnehmen kann und aus einer horizontalen Position in eine gekippte Position kippbar ist, in welcher gekippten Position das zweite Ende tiefer als das erste Ende liegt, wobei das erste Ende zum Einbringen des Produktes in das Innere der Trommel und zum Beinhalten des Produktes darin ausgebildet ist, wobei das zweite Ende einen Auslass zur Abgabe des Produktes aus der Trommel besitzt, ferner Mittel zum Drehen der Trommel in zumindest einer von horizontalen und gekippten Positionen, Mittel zum Kippen der Trommel aus der horizontalen in die gekippte Position, wobei zur Behandlung von absorbierenden, sanitären Papierprodukten, um derartige Produkte in ihre Komponenten bzw. in Komponenten davon, deren Form zum Rezyklieren bzw. zur Wiederverwendung geeignet ist, aufzutrennen und zwar unter Verwendung von Mitteln zum Abtrennen von Feststoffen von Flüssigkeiten in der Trommel, einen im Inneren der Trommel befindlichen Rührer, um ein Kommunizieren des Produktes in der Trommel zu bewirken. Mit diesem Verfahren und der hierfür ausgebildeten Vorrichtung soll erreicht werden, dass absorbierende, sanitäre Papierprodukte mit superabsorbierenden Polymer so behandelt werden können, dass einige oder alle der Komponenten derartiger Produkte in einer Form wiedergewonnen werden können, die das Rezyklieren oder eine andere Verwendung dieser Komponenten erleichtert. Eine Entsorgung ist nicht vorgesehen.

Des weiteren ist durch die DE-A-198 53 520 ein Verfahren und eine Vorrichtung zum Entsorgen von Hygienemüll bekannt. Um Volumen und Gewicht von Hygienemüll zu vermindern und die Belästigung durch üble Gerüche abzustellen, wird hier der Hygienemüll nach mechanischer Zerkleinerung mit einer Hygieneflüssigkeit in Berührung gebracht, welche Wasser mit einem in transportablen Toiletten verwendbaren Sanitärzusatz in solchen Mengen enthält, dass der im Hygienemüll enthaltene Zellstoff mit Gelkörnern zusammen mit den darin aufgenommenen Körperausscheidungen aufgelöst wird. Die gebrauchte Hygieneflüssigkeit wird in den Kanal abgeführt, wobei der verbleibende Rest des zerkleinerten Hygienemülls im wesentlichen aus Kunststoff nach dem Entwässern recycelt wird. Die bei diesem Verfahren verwendeten Sanitärzusätze ermöglichen jedoch keine Aufbereitung der im Hygienemüll u. a. enthaltenen Superabsorber, wie Polymere.

Absorbierende sanitäre Papierprodukte bestehen bekannterweise aus einem Vlies aus einem flüssigkeitsdurchlässigen Material, z. B. aus einer flüssigkeitsdurchlässigen Membran aus einem geeigneten Kunststoff oder aus gewebten Produkten aus Baumwolle, einer flüssigkeitsundurchlässigen hinteren Lage, abbaubaren Kunststofffilmen auf Stärkebasis, Webstoff oder Kautschuk und einem absorbierenden oder adsorbierenden Kern aus im Luftstrom aufgebrachten Zellstoffflusen und/oder aus synthetischen zellulosehaltigen gebundenen oder ungebundenen Polypropylenfilamenten, Hanf oder anderen adsorbierenden Fasermaterialien. Der Kern ist in einer Krepp-Umhüllung aus nassfesten Papierlagen oder einem Material mit ähnlichen Eigenschaften eingeschlossen oder eingewickelt. Die Umhüllung des Kerns kann atmungsaktiv, biologisch abbaubar, geruchshemmend oder auf andere Weise abbaubar oder löslich sein. Der Kern kann auch aus einem Material aus superabsorbierenden Polymer-(SAP-)Material entsprechend der DE-691 24 107 D bestehen. Windeln und Inkontinenz-Produkte benutzen druckempfindliche Klebstoffe für wiederverschließbare Klebebandlaschen oder ähnliche Verschlussmechanismen. Auch können diese Inkontinenz-Produkte mit druckempfindlichen Klebstoffen für Klebstofflinien versehen sein, um eine Befestigung z. B. in Form einer Einlage an der Unterwäsche der Trägerin bzw. Trägers befestigen zu können. Die Verwendung von absorbierenden, sanitären Papierprodukten ist zwar praktisch oder auch notwendig; ihre Entsorgung führt jedoch zu zahlreichen Problemen. Nach den bekannten Verfahren und mittels der bekannten Vorrichtungen können derart absorbierende sanitäre Papierprodukte so behandelt werden, dass einige oder alle der Komponenten derartige Produkte in einer Form wiedergewonnen werden können, die das Recyceln oder eine andere Verwendung dieser Komponenten erleichtert.

Des weiteren ist durch die WO 03/009942 gemäß dem Oberbegriff des Anspruches 1 eine Vorrichtung zur Vor-Ort-Entsorgung von Inkontinenz-Artikeln bekannt. Diese Vorrichtung umfasst ein Grundgehäuse, in dem eine Einrichtung aus einem trommelartigen Gehäuse mit einer oberen Einfüllöffnung und einer im Innenraum des Gehäuses angeordneten, feststehenden oder um eine horizontale Drehachse in Umlauf versetzbare zylindrische Trommel und mit zwei die beiden Trommelöffnungen stirnseitig verschließenden Wandplatten, von denen die erste Wandplatte mit dem Trommelgehäuse verbunden ist und die zweite Wandplatte in Trommeldrehachsenlängsrichtung verschiebbar und um ihre Mittelachse drehbar ausgebildet ist, wobei die beiden stirnseitigen Trommelwandplatten an ihren einander gegenüberliegenden Wandflächen in den Trommelinnenraum hineinreichende Zerkleinerungsmesser tragen, angeordnet ist. Außerdem sind Zuläufe für Waschwasser, für eine Hygieneflüssigkeit und für Chemikalien sowie Ableitungen für die abgesogenen festen Bestandteile des Entsorgungsgutes vorgesehen.

Mit einer derartigen Vorrichtung ist es möglich, Inkontinenz-Artikel vor Ort zu entsorgen mit der Möglichkeit, die einzelnen erhaltenen Komponenten abzuleiten oder zu pelletieren. Dadurch, dass während des Zerkleinerungsprozesses des Entsorgungsgutes der Innenraum der Trommel der Vorrichtung in seiner Größe in einem vorgegebenen Zyklus vergrößert und verkleinert wird, wird auf das Entsorgungsgut im Innenraum der Trommel ein Pressdruck erzeugt, der das Zerkleinern des Entsorgungsgutes vermittels der gegeneinander arbeitenden Messer an den stirnseitigen Wandplatten der Trommel unterstützt wird. Nach dem Entfernen des Waschwassers mit den in diesen gelösten Bestandteilen des Entsorgungsgutes verbleibt zunächst im Innenraum der Trommel die zerkleinerte Feststoffkomponente des Entsorgungsgutes, die ebenfalls vermittels einer staubsaugerartigen Einrichtung aus dem Innenraum der Trommel abgesogen wird. An der Innenwandfläche der Trommel verbleiben dann an der Wandfläche haftende Feststoffteilchen der Entsorgungskomponente, die durch Abziehen der Luft aus dem Innenraum der Trommel durch die lochartigen Durchbrechungen in der Trommelwand entfernt werden. Durch das Absaugen der Luft aus dem Innenraum der Trommel wird ein so genannter Losreißeffekt für die an der Trommelwandfläche haftenden Kunststoffteilchen des Entsorgungsgutes erzeugt. Auch hier wird durch wechselweises Ändern der Größe des Innenraumes der Trommel die Luftdurchtrittsgeschwindigkeit durch die lochartigen Durchbrechungen in der Trommelwand gesteuert, so dass bei einem kleinen Innenraum eine hohe Luftdurchtrittsgeschwindigkeit bei konstantem Volumenstrom erreicht wird. Die Kunststoffteilchen des Entsorgungsgutes werden mit der Luft von der staubsaugerartigen Einrichtung angesogen in dieser getrennt, wobei die hier erhaltene Feststoffkomponente des Entsorgungsgutes in einer beutelförmigen Einrichtung aufgefangen und der Entsorgung zugeführt wird.

Bei dieser Vorrichtung erfolgt das Ableiten des in der Trommel aufbereiteten Inkontinenz-Artikels über die bodenseitige Entnahmeöffnung des Trommelgehäuses und über einen trichterförmigen Stutzen, wobei eine Steuerung von Verschlussklappen für die Entnahmeöffnung vorgesehen ist. An diese senkrecht verlaufende Ableiteinrichtung schließt sich eine Verdichterschnecke an, die gleichzeitig Förderfunktion hat und über die die Kunststoffteilchen des Entsorgungsgutes bei gleichzeitiger Vorwärtsbewegung in Richtung zu einem Auffangbehälter verdichtet. Diese Verdichterschnecke hat hier keine gesonderten Ableitungen für durch die Verdichtung freigewordenes Wasser.

Die US 5 232 584 A offenbart ein Reinigungssystem mit einem einzigen mehrstufigen Reaktor zur Desinfizierung, Waschung und Konzentrierung fester Abfälle, einschließlich kontaminierten Bodens, hochkonzentrierter biologischer Feststoffe, gebrauchten Tierstreus und gebrauchter Windeln.

Dabei wird Abfall in den Reaktor dieser Vorrichtung eingebracht. Mindestens ein desinfizierendes und chemisches Agens .(einschließlich eines kationischen Tensids) wird zusammen mit Wasser in diesen Reaktor eingebracht, um den genannten festen Abfall zu desinfizieren und mit Hilfe eines mechanischen Mischmittels innerhalb des genannten Reaktors zu verarbeiten. Bei Bedarf wird ein desinfizierendes Gas in denselben Reaktor geleitet. Wenn die Zeit zur Zuführung, Desinfektion, Verarbeitung und Mischung abgelaufen ist, wird das Verfahrenswasser abgelassen. Der desinfizierte und verarbeitete, feuchte, feste Abfall wird in ein Ausstoßkammermittel entladen, das restliches Wasser entfernt und der desinfizierte und verarbeitete feste Abfall kompaktiert.

Das abgelassene Verfahrenswasser und das entfernte Restwasser werden entweder zur Beseitigung in ein städtisches Kanalisationsnetz entsorgt oder in ein chemisches Neutralisierungsmittel zur Vorbehandlung vor der Einleitung in die Kanalisation gebracht oder zur Herstellung eines Stickstoff und Phosphor enthaltenden Düngehilfsstoffes verwendet. Das bei dieser Vorrichtung eingesetzte Ausstoßkammermittel ist ein wellenloser Förderer mit Spiralen, wodurch das Problem des Zersetzens vermieden wird. Bei Betrieb dreht sich der Schneckenförderer im Uhrzeigersinn, wobei er den behandelten festen Abfall zu einem Ende fördert und dabei das ursprünglich im behandelten festen Abfall enthaltene Restwasser durch die Wasserabflüsse ausdrückt und das ausgedrückte Wasser durch einen Wasserauslass abgibt. Anschließend wird der entwässerte feste Abfall durch ein rotierendes Ausstoßmittel an einem Ende abgegeben und der Schneckenförderer beginnt, sich im Gegenuhrzeigersinn zu drehen, wobei er eine neue Charge behandelten Abfalls für ähnliche Kompaktierungs-/Entwässerungs- und Ausstoßvorgänge zu einem entgegengesetzten Ende bringt.

Der vorliegenden Erfindung liegt daher die Aufgabe zugrunde, eine kompakte, kleinsten Raum einnehmende Vorrichtung der eingangs beschriebenen Art von hoher Wirtschaftlichkeit, geringer Störanfälligkeit und mit einer verbesserten Trennung der Feststoffkomponenten von der Waschflüssigkeit und einer Restflüssigkeitsentfernung aus dem Zerkleinerungsprodukt zu schaffen, mit der Hygienemüll unter Verwendung eines hohen Schneid-, Zerreiß- und Zerteileffektes in die einzelnen Komponenten zerlegt werden können, um die erhaltenen und zerkleinerten Feststoffkomponenten des Entsorgungsgutes vor Ort zu rezyklieren und somit das Gesamtprodukt wirtschaftlich zu entsorgen oder einer zentralen industriellen Verarbeitung zuzuführen,
wobei eine Reduzierung der für die Zerkleinerung und für das Zertrennen des Entsorgungsgutes aufzuwendenden Kräfte reduziert werden sollen. Darüber hinaus soll die Vorrichtung nur wenige Bauteile umfassen, so dass die Vorrichtung wirtschaftlich hergestellt werden kann. Dadurch, dass alle Bauteile auf kleinstem Raum in einem Gehäuse untergebracht sind, ist der Einsatz auch z. B. in Heimen mit geringer Insassenanzahl wirtschaftlich einsetzbar.

Gelöst wird diese Aufgabe mit einer Vorrichtung mit den im Anspruch 1 angegebenen Merkmalen.

Erfindungsgemäß ist die Vorrichtung zur Entsorgung von Hygienemüll gemäß der eingangs beschriebenen Art in der Weise ausgebildet, dass die Ableiteinrichtung für das Zerkleinerungsprodukt im Bodenbereich des Behälters angeordnet und in dessen Behälterkörper integriert ist und in Behälterlängsrichtung verlaufend ist, dass die im Bodenbereich des Behälters angeordnete und in dessen Behälterkörper integrierte sowie in Behälterlängsrichtung verlaufende Ableiteinrichtung als Ableitrinne mit in Ableitrichtung für das Zerkleinerungsprodukt verlaufender Neigung ausgebildet ist, an die sich das Gehäuse mit der Verdichterschnecke anschließt, die mit einem im Innenraum des Gehäuses der Verdichterschnecke angeordneten und sich in Verdichterschneckenlängsrichtung erstreckenden Schersiebblech zum Trennen des zerkleinerten, Feststoffkomponenten enthaltenden Hygienemülls von der Waschflüssigkeit mit den in dieser gelösten Bestandteilen des Hygienemülls eine Funktionseinheit bildet, angeordnet ist, wobei das Schersiebblech aus einem gewölbten plattenförmigen Siebkörper mit einer teilkreisförmigen Wölbung besteht, deren Radius dem Außenradius der Verdichterschnecke entspricht, wobei im oberen Bereich des Gehäuses mit der Verdichterschnecke eine Verdichterdüse mit einem sich nach oben verjüngenden Abschnitt zum Abtrennen von Restflüssigkeit ausgebildet ist, der über eine Verbindungsleitung mit der Ableitung für die Flüssigkeit aus dem Gehäuse zu einem Abwasserkanal verbunden ist, wobei über eine Ableitung vermittels einer Pumpe die Waschflüssigkeit mit den in dieser gelösten Bestandteilen des Hygienemülls einem Abwasserkanal zuführbar ist und wobei im oberen Bereich des Gehäuses mit der Verdichterschnecke der von der Flüssigkeit befreite Rest des zerkleinerten und feste Bestandteile aufweisenden Hygienemülls einem Sammelbehälter zuführbar ist.

Mit der erfindungsgemäßen Vorrichtung ist es möglich, Hygienemüll und insbesondere Inkontinenz-Artikel wirtschaftlich vor Ort zu entsorgen mit der Möglichkeit, die einzelnen erhaltenen Komponenten, soweit zulässig, abzuleiten oder gegebenenfalls zu pelletieren. Das Zerkleinern des Entsorgungsgutes erfolgt vermittels der Messerscheibe, ohne dass es hierzu eines hohen Kräfte- bzw. Energieaufwandes bedarf. Die Waschflüssigkeit mit den in dieser gelösten Bestandteilen des Entsorgungsgutes und die zerkleinerten Feststoffkomponenten des Entsorgungsgutes werden aus dem Innenraum des trommelartigen Behälters in eine Verdichterschnecke übergeleitet und mittels einer speziell auf Unterdruck optimierten Wasserpumpe abgezogen, wobei vermittels der Verdichterschnecke in Verbindung mit einem speziell geschaffenen Schersiebbleches dann die Waschflüssigkeit mit den in dieser gelösten Bestandteilen des Entsorgungsgutes von den zerkleinerten Feststoffkomponenten des Entsorgungsgutes getrennt wird. Die Waschflüssigkeit wird dann dem Abwasserkanal zugeführt, wohingegen die zerkleinerten Feststoffkomponenten des Entsorgungsgutes einem Sammelbehälter zugeführt wird, wobei auch die Möglichkeit besteht, vermittels einer geeigneten Einrichtung die Feststoffkomponenten zu pelletieren.

Ein weiterer Vorteil liegt in der Vor-Ort-Entsorgung des aufbereiteten Hygienemülls bzw. der Inkontinenz-Artikel, wobei auch eine stationsweise Entsorgung z. B. in Altenheimen, Krankenhäusern und Kinderheimen möglich ist. Auch ein Pelletieren der Restwertstoffe, wie Kunststoffe und Zellstoffe, ist möglich. Sowohl einzelne als auch größere Mengen an Inkontinenz-Artikeln können entsorgt werden. Der gesamte Prozess kann bei niedrigen Temperaturen durchgeführt werden. Als Waschflüssigkeit wird bevorzugterweise kaltes Waschwasser eingesetzt. Die Bestückung der Vorrichtung kann von Hand oder auch maschinell und automatisch, z. B. vermittels Förderbänder, vorgenommen werden. Vorteilhaft ist, dass eine Entsorgung vor Ort ohne Lagerung und ohne Zwischentransporte möglich ist.

Die Vorrichtung weist nur wenige Bauteile auf, wodurch die Störanfälligkeit der Vorrichtung wesentlich verringert wird. Es hat sich gezeigt, dass mittels der eingesetzten Verdichterschnecke in Verbindung mit dem Schersiebblech eine gute Trennung der Waschflüssigkeit mit den in ihr gelösten Bestandteilen des Entsorgungsgutes von den zerkleinerten Feststoffkomponenten des Entsorgungsgutes erreicht wird, so dass eine zusätzliche Nachbehandlung zur Beseitigung von eventuell noch enthaltender Restflüssigkeit in dem zerkleinerten Entsorgungsgut entfällt.

So ist die Ausbildung der Ableiteinrichtung besonders vorteilhaft, wenn diese Einrichtung als Ableitrinne mit einer in Richtung zur Verdichterschnecke verlaufenden Neigung ausgebildet ist, so dass das aus dem Behälterinnenraum abzuleitende Produkt aufgrund seiner Schwerkraft und Fließfähigkeit in den Aufnahmebereich der Verdichterschnecke fließen kann. Dadurch entfällt ein weiterer störanfälliger Antrieb für eine motorisch angetriebene Ableitvorrichtung oder für eine Förderschnecke im Bodenbereich des Behälters.

Um noch vorhandene Restflüssigkeit in dem zerkleinerten Entsorgungsgut zu entfernen, ist es vorteilhaft, dass im oberen Bereich des Gehäuses mit der Verdichterschnecke der Vorrichtung eine Verdichterdüse mit einem sich nach oben verjüngenden Abschnitt zum Abtrennen von Restflüssigkeit ausgebildet ist, der über eine Verbindungsleitung mit der Ableitung für die Flüssigkeit aus dem Gehäuse mit der Verdichterschnecke verbunden ist.

Vorteilhafte Ausgestaltungen der Erfindung sind Gegenstand der Unteransprüche.

Die Reißmesser der Messerscheibe sind dabei so geformt, dass Hygienemüll bzw. die Inkontinenz-Artikel nicht nur zerschnitten, sondern vor allem aufgerissen und zerhackt werden bei einem Umlauf der Messerscheibe in Arbeitsrichtung. Des weiteren ist die Form, die Ausgestaltung und die Anordnung der Reißmesser so gewählt, dass sich günstige Strömungsverhältnisse bei Betrieb der Vorrichtung einstellen.

In der Zeichnung ist der Gegenstand der Erfindung beispielsweise dargestellt. Es zeigen:
- Fig. 1: in einer schaubildlichen Ansicht die Entsorgungsvorrichtung mit der mechanischen Zerkleinerung des Hygienemülls bei abgenommenen Wandplatten,
- Fig. 2: schematisch den Aufbau der Entsorgungsvorrichtung mit ihren verschiedenen Bauteilen, wie trommelartigen Behälter mit Messerscheibe, Ableitvorrichtung und Verdichterschnecke mit Schersiebblech,
- Fig. 3: einen senkrechten Schnitt durch den trommelartigen Behälter,
- Fig. 4: einen senkrechten Schnitt durch den trommelartigen Behälter in einer weiteren Ausführungsform gemäß Fig. 1,
- Fig. 5: schematisch das Gehäuse mit der Verdichterschnecke und dem Schersiebblech,
- Fig. 6: einen senkrechten Schnitt durch das Gehäuse mit der Verdichterschnecke und dem Schersiebblech gemäß Linie VI-VI in Fig. 5,
- Fig. 7: eine schaubildliche Teilansicht des Gehäuses mit der Verdichterschnecke und dem Schersiebblech,
- Fig. 8: die kastenförmige Öffnung des Gehäuses der Verdichterschnecke im Bereich des Schersiebbleches,
- Fig. 9: eine schaubildliche Ansicht des Gehäuses mit dem Schersiebblech,
- Fig. 10: eine schaubildliche Seitenansicht eines Reißmessers für die mechanische Zerkleinerung des Hygienemülls,
- Fig. 11: eine Seitenansicht des Reißmessers,
- Fig. 12: eine schaubildliche Rückansicht des Reißmessers,
- Fig. 13: eine Rückansicht des Reißmessers,
- Fig. 14: das Reißmesser in einer Ansicht auf seine Schneidkante und
- Fig. 15: das Reißmesser in einer Ansicht aus seiner Schneid- und Reißkante.

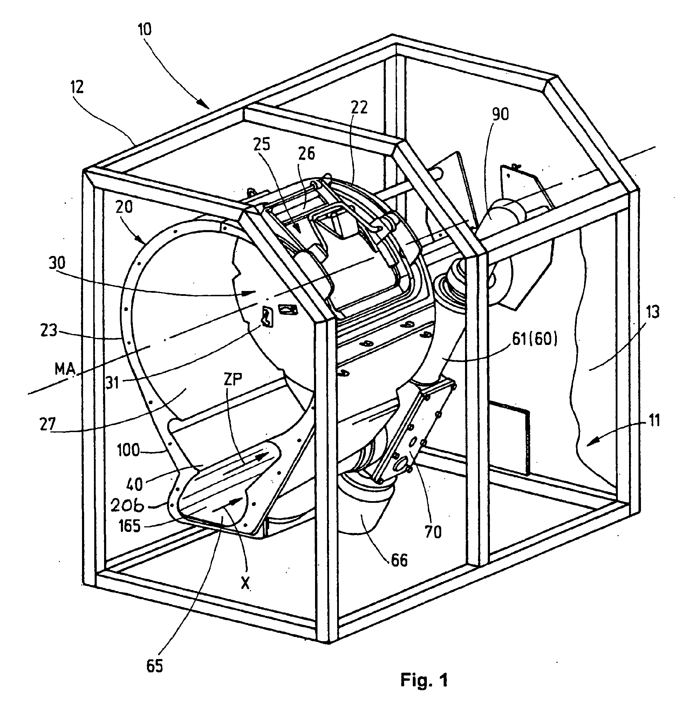

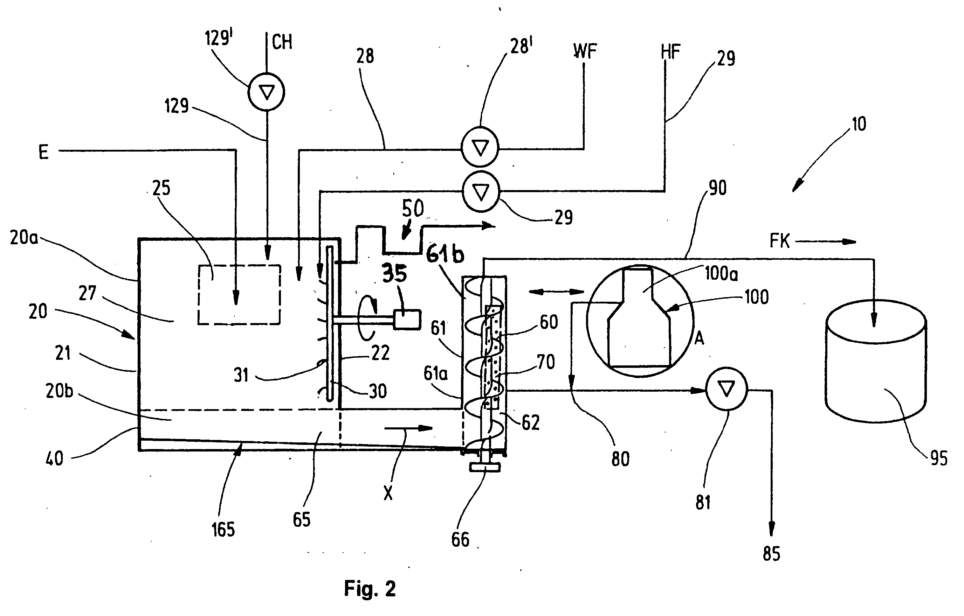

Gemäß Fig. 1 und 2 besteht die Vorrichtung 10 zur Entsorgung von Hygienemüll, insbesondere von Inkontinenz-Artikeln, nachfolgend als Entsorgungsgut E bezeichnet, aus einem Gehäuse 11, das von einem Rahmen 12 mit Seitenwänden 13 gebildet wird.

In dem Rahmen 12 ist ein feststehender, trommelartiger Behälter 20 mit waagerecht verlaufender Mittelachse MA und mit senkrechten Stirnwänden 21, 22 angeordnet. Bevorzugterweise ist der Behälter 20 federnd-elastisch in dem Rahmen 12 gelagert. Der Behälter 20 weist in seinem oberen Bereich eine vermittels eines Deckels 26 verschließbare Einfüllöffnung 25 für das Entsorgungsgut E auf.

Im Innenraum 27 des Behälters 20 ist im Bereich einer seiner beiden Stirnwände 21, 22 eine senkrechte Messerscheibe 30 mit Reißmessern 31 angeordnet, die vermittels einer Antriebseinrichtung 35 umlaufend antreibbar ist, wobei der Umlauf der Messerscheibe 30 konstant in der einen Richtung oder in der anderen Richtung erfolgen kann, wobei bevorzugterweise auch ein ständiger Wechsel der Umlaufrichtung vorgenommen werden kann, so dass die an der Messerscheibe 30 vorgesehenen Reißmesser 31 voll zur Wirkung kommen können und somit der Zerreiß- und Zerkleinerungsprozess des Entsorgungsgutes verbessert wird.

Über Zuleitungen 28, 29, 129 mit integrierten Dosierpumpen bzw. - vorrichtungen 28', 29', 129' werden dem Innenraum 27 des Behälters 20 Waschflüssigkeit WF, bevorzugterweise kaltes Waschwasser, Hygieneflüssigkeit HF zum Unterdrücken von Gerüchen und zur Desinfektion und Chemikalien CH in pulverförmigen oder flüssigen Zustand zugeführt, wobei die Chemikalie zum Aufbereiten der Superabsorber, wie Polymere, eingesetzt werden, die im Hygienemüll und insbesondere in den im Hygienemüll enthaltenen Windeln enthalten sind. Als Chemikalien kommen insbesondere Calciumchloride oder andere geeignete Chemikalien, auch in Kombination mit anderen Chemikalien, zum Einsatz. Eingesetzt werden im wesentlichen solche Chemikalien, die gut entsorgbar sind. Als Desinfektionsmittel können auch Sauerstoff, Ozon, Chlor oder Chlorverbindungen eingesetzt werden.

Für den Aufbereitungsprozess des Hygienemülls werden dem Behälter 20 Chemikalien zum Aufbereiten der Superabsorber, wie Feststoffprodukte aus Kunststoff oder superabsorbierende Polymerprodukte oder Gelkörper, bevorzugterweise Calciumchlorid zugeführt.

Der trommelartige Behälter 20 aus Stahl, Kunststoff oder anderen geeigneten Materialien, weist in seinem Bodenbereich 40 eine in Behälterlängsrichtung verlaufende Ableiteinrichtung 165 auf, die als Ableitrinne 65 mit in Richtung zu einer sich an die Ableitrinne 65 anschließende Verdichterschnecke 60 verlaufenden Neigung ausgebildet ist (Fig. 2). Mit der Ableitrinne 65 wird das sich bodenseitig im Innenraum 27 des Behälters 20 ansammelnde Zerkleinerungsprodukt ZP ausgetragen. Dieses Zerkleinerungsprodukt ZP besteht aus Waschflüssigkeit mit in dieser gelösten Bestandteilen des Entsorgungsgutes E und aus der zerkleinerten Feststoffkomponente FK des Entsorgungsgutes E. Die Ableiteinrichtung 165 ist als Gleitbahn mit in Richtung zu der Verdichterschnecke 60 geneigten Fläche und als Ableit- und Sammelrinne 65 ausgebildet, so dass das mit Waschflüssigkeit durchsetzte und angereicherte Zerkleinerungsprodukt aufgrund seiner Fließfähigkeit zur Verdichterschnecke 60 fließen und von dieser aufgenommen werden kann. Die Ableiteinrichtung 165 kann auch andersartig ausgebildet sein, so z. B. als Transportband, als Förderschnecke oder als hydraulisch betriebener Schieber. Förderschnecken sind nicht zu bevorzugen, da wegen sich festsetzendem Zerkleinerungsprodukt öfters eine Reinigung erforderlich ist. Vermittels dieser Ableiteinrichtung 165 wird das Zerkleinerungsprodukt ZP aus dem Innenraum 27 des Behälters 20 einer Verdichterschnecke 60 in Pfeilrichtung X zugeführt und zwar unter Zuhilfenahme einer Saugpumpe bzw. einer einen Unterdruck aufbauenden Wasserpumpe.

Seitlich des trommelartigen Behälters 20 ist das rohrförmige Gehäuse 61 angeordnet, das die Verdichterschnecke 60 aufnimmt. Das Gehäuse 61 mit der Verdichterschnecke 60 ist senkrecht oder ansteigend geführt (Fig. 1 und 2).

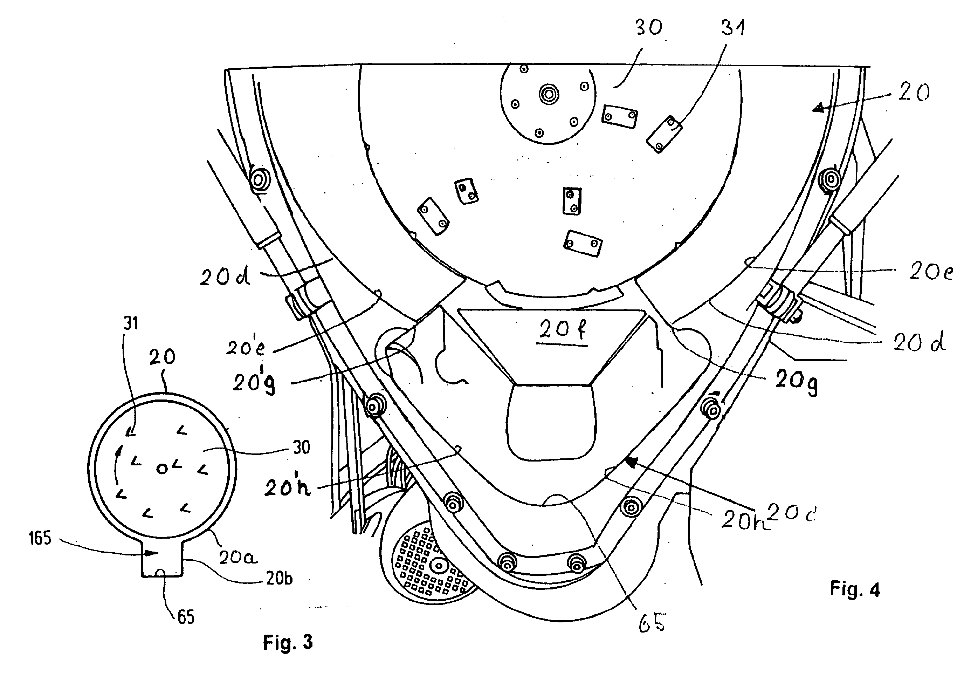

Der trommelartige Behälter 20 besteht aus einem oberen zylindrischen Behälterkörper 20a, der bodenseitig in einen sich verjüngenden Abschnitt 20b übergeht, der die Ableitrinne 65 bildet (Fig. 3). Durch diese Formgebung des Behälters 20 wird während des Betriebes der Vorrichtung eine Verwirbelung des Zerkleinerungsproduktes erreicht, zu der die Form der Reißmesser 31 der Messerscheibe 30 beiträgt.

Fig. 4 zeigt eine Ausführungsform, bei der der trommelartige und zylindrische Behälter 20 bodenseitig in einen konisch sich verjüngenden Abschnitt 20c übergeht, dessen bodenseitiger Abschluss die Ableitrinne 65 bildet, die im unteren Bereich bogenförmig verläuft. Die in den Abschnitt 20c übergehende Trommelwand 20d begrenzt mit ihren Endabschnitten 20e, 20'e eine Öffnung 20f, deren Größe gegenüber dem Trommeldurchmesser kleiner ist. An diese Öffnung 20e schließt sich der Abschnitt 20c mit der Ableitrinne 65 an. Die Behälterwandendabschnitte 20e, 20'e gehen in zungenartige Abschnitte 20g, 20'g über, an die sich die konisch verlaufenden Wandflächen 20f, 20'h des Behälterabschnittes 20c anschließen, so dass die in Fig. 4 dargestellte Querschnittsform des Behälters 20 erhalten wird.

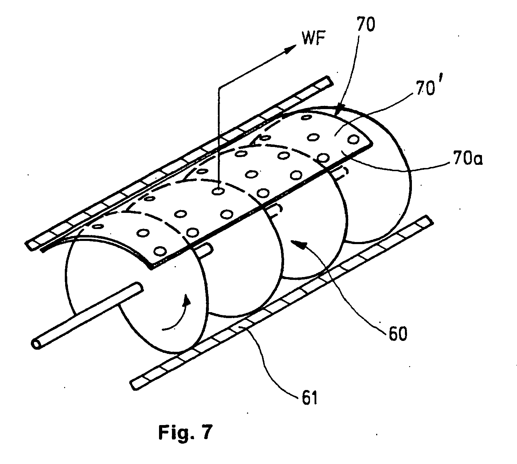

Im unteren Bereich 61 a des Gehäuses 61 der Verdichterschnecke 60 steht dessen Gehäuseinnenraum 62 über die Ableitrinne 65 mit dem Innenraum 27 des Behälters 20 in Verbindung, so dass die Ableitrinne 65 bis in den Aufnahmebereich der Verdichterschnecke 60 geführt wird. Auf diese Weise kann das Zerkleinerungsprodukt ZP aus dem Behälter 20 der Verdichterschnecke 60 direkt zugeführt werden. Der Antrieb für die Verdichterschnecke 60 ist bei 66 in Fig. 1 und 2 dargestellt. Als Verdichterschnecke 60 wird eine Ausgestaltung eingesetzt, bei der die Verdichterschnecke unterschiedliche Steigungen und unterschiedliche Stegstärke aufweist. Vermittels der Verdichterschnecke wird das Zerkleinerungsprodukt ZP in den oberen Bereich 61 b des Gehäuses 61 transportiert. Die Abtrennung der Waschflüssigkeit mit den in dieser gelösten Bestandteilen des Entsorgungsgutes E von der zerkleinerten Feststoffkomponente FK des Entsorgungsgutes erfolgt mittels eines in dem Gehäuse 61 vorgesehenen Schersiebbleches 70. Die sich an die Ableitrinne 65 anschließende Verdichterschnecke 60 ist in einem rohrförmigen Gehäuse 61 angeordnet. Die Ableitrinne 65 ist bis in den bodenseitigen Bereich der Verdichterschnecke 60 geführt, die mit dem im Innenraum 62 des Gehäuses 61 angeordneten und sich in Verdichterschneckenlängsrichtung erstreckenden Schersiebblech 70 zum Trennen des zerkleinerten, Feststoffkomponenten enthaltenden Hygienemülls von der Waschflüssigkeit WF mit den in dieser gelösten Bestandteilen des Hygienemülls, eine Funktionseinheit bildet, derart, dass die Verdichterschnecke 60 und das Schersiebblech 70 scherenartig zusammenwirken, um ein Verstopfen des Schersiebbleches 70 zu vermeiden, wobei über eine Ableitung 80 vermittels einer Pumpe 81 die Waschflüssigkeit WF mit den in dieser gelösten Bestandteilen des Hygienemülls abgesogen und einem Abwasserkanal 85 zugeführt wird (Fig. 2, 5, 6 und 7). Im oberen Bereich 61 b des Gehäuses 61 mit der Verdichterschnecke 60 wird der von der Flüssigkeit befreite Rest FK des zerkleinerten und feste Bestandteile aufweisenden Hygienemülls einem Sammelbehälter 95 zugeführt.

Die anfallende Waschflüssigkeit WF mit den in dieser gelösten Bestandteilen des Entsorgungsgutes wird über eine Ableitung 80 mit integrierter Pumpe 81 abgezogen und dem Abwasserkanal 85 zugeführt.

Eine zusätzliche Entfernung von Restflüssigkeit aus dem Zerkleinerungsprodukt ZP kann über eine spezielle Ausgestaltung des Übergangbereiches vom Innenraum 62 des Gehäuses 61 zur Ableitung 80 erreicht werden. Diese Ausgestaltung besteht in einer Verdichterdüse 100 mit einem oberen verjüngenden Abschnitt 100a, die in Fig. 2 bei A dargestellt ist.

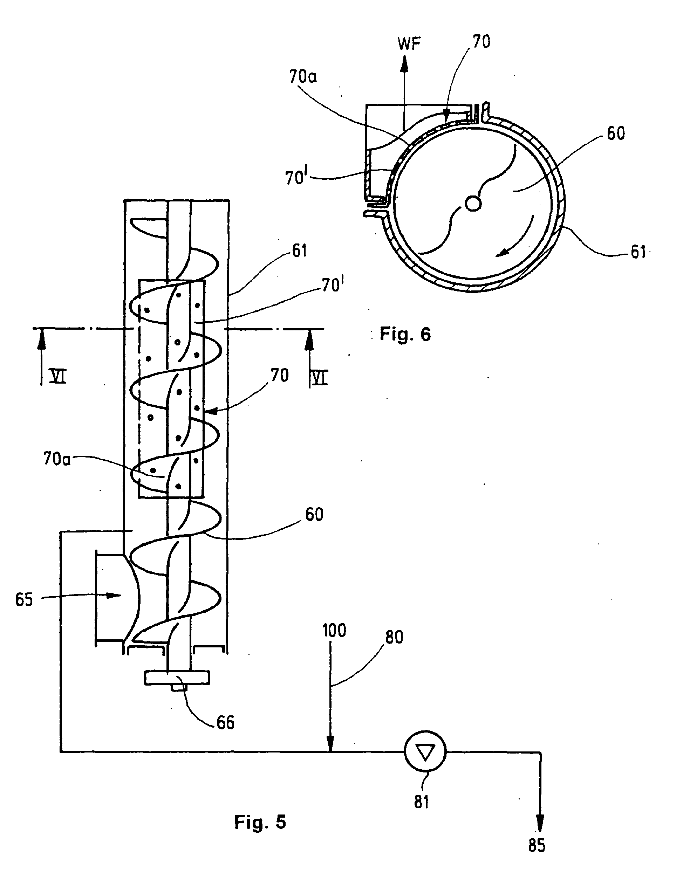

Das Schersiebblech 70 ist als in das Gehäuse 61 der Verdichterschnecke 60 einsetzbarer Einsatzkörper 77 ausgebildet, wobei die gewölbte Siebfläche 70a abstandslos zur Umlauffläche der Verdichterschnecke 60 liegend angeordnet ist, so dass die Verdichterschnecke 60 an der Innenwandfläche des Schersiebbleches 70 entlang schert (Fig. 5, 6 und 7).

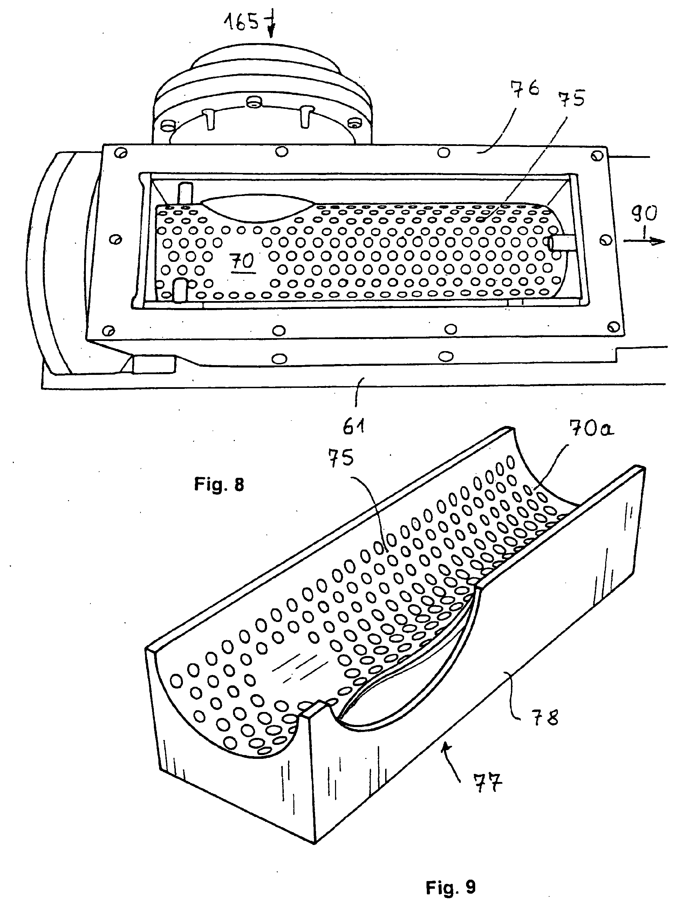

Das Schersiebblech 70 ist, wie in Fig. 8 dargestellt, im Bereich einer in dem die Verdichterschnecke 60 aufnehmenden Gehäuse 61 ausgebildeten, verschließbaren Öffnung 75 in einem kastenförmigen Gehäusestutzen 76 angeordnet, der mit dem Gehäuse 61 verbunden ist. In diesem kastenförmigen Gehäusestutzen 76 ist der als Schersiebblech 70 ausgebildete Einsatzkörper 77 eingesetzt, der aus einem kastenförmigen Rahmen 78 besteht, in dem die gewölbte Siebfläche 70a angeordnet ist (Fig. 9). Der Einsatzkörper 77 ist in dem Gehäuse 61 auswechselbar angeordnet.

Die Messerscheibe 30 trägt auf ihrer dem Innenraum 27 des Behälters 20 zugekehrten Wandfläche eine Anzahl von Reißmessern 31 zum Zerkleinern, Zerteilen und Zerreißen des Entsorgungsgutes. Dabei kann es sich um einzeln angeordnete Reißmesser 31 handeln, jedoch auch ringförmig angeordnete Reißmesser können verwendet werden, wobei neben einem Reißmesserring auch mehrere ineinandergesetzte Reißmesserringe mit sich zum Mittelpunkt verkleinerndem Durchmesser eingesetzt werden können.

Um eine effektive Zerkleinerung, Zerteilung und Zerreißen des Entsorgungsgutes in Verbindung mit der Waschflüssigkeit zu erreichen, ist es vorteilhaft, wenn die Länge des Behälters 20 in etwa dem Durchmesser der Stirnwände 21 bzw. 22 des Behälters 20 entspricht, wobei in Fig. 1 die eine der beiden Stirnwände 21, 22 nicht dargestellt ist. Der Durchmesser der Messerscheibe 30 sollte in etwa dem Durchmesser der Stirnwände 21, 22 im Bereich oberhalb der Ableitrinne 65 des Behälters 20 entsprechen. Der Behälter 20 ist in dem Rahmen 12 des Gehäuses 11 der Vorrichtung 10 feststehend angeordnet und weist eine in etwa zylindrische Form auf.

Um ein einwandfreies Überführen des in dem Behälter 20 aufbereiteten Entsorgungsgutes in die Ableitrinne 65 zu gewährleisten, geht die Behälterseitenwand 23 in einen, bevorzugterweise konisch sich nach unten verjüngenden Abschnitt 20b über, der in die Ableitrinne 65 übergeht (Fig. 1, 2, 3 und 4).

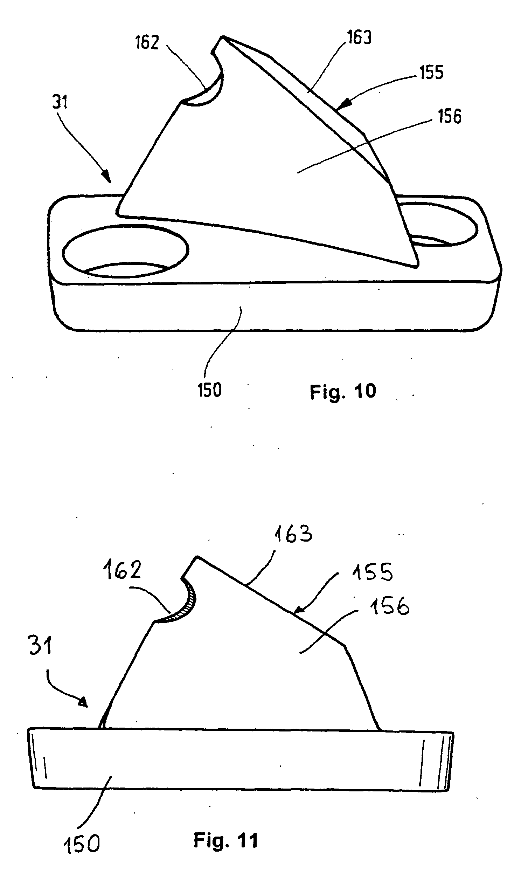

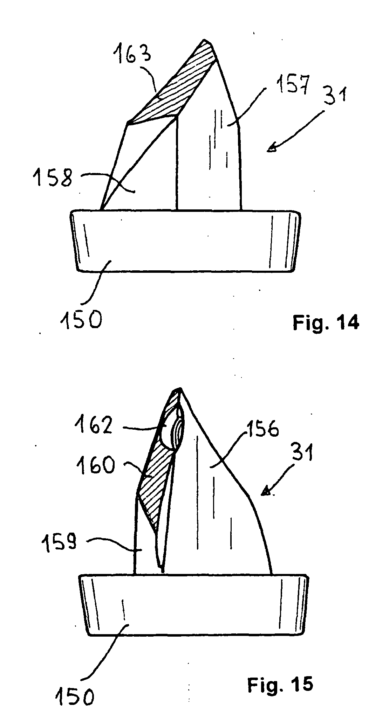

Für eine effektive Zerkleinerung des Hygienemülls weist jedes Reißmesser 31 einen optimierten Messerschliff auf. Gemäß der Ausführungsform gemäß Fig. 10 bis 15 besteht jedes Reißmesser 31 aus einer in etwa rechteckförmigen Befestigungsplatte 150 und aus einem senkrecht auf der Befestigungsplatte 150 stehend angeordneten und diagonal zu dieser verlaufenden platten- und in etwa dreieckförmigen Messerkörper 155. Die Befestigungsplatte 150 ist mit Durchbrechungen zur Aufnahme von Befestigungsschrauben versehen, um das Reißmesser 31 an der Messerscheibe 30 befestigen zu können, jedoch auch andere Befestigungsarten können zur Anwendung gelangen. Die Befestigungsplatte 150 kann auch eine andere geometrische Formausgestaltung aufweisen, jedoch ist die rechteckförmige Ausgestaltung von Vorteil, da durch die Anordnung des Messerkörpers 155 in diagonaler Richtung zur rechteckförmigen Befestigungsplatte 150 der Messerkörper 155 eine Länge aufweisen kann, die in etwa der Diagonalen der Befestigungsplatte 150 entspricht.

Der Messerkörper 155 ist plattenförmig ausgebildet; er ist senkrecht stehend auf der Befestigungsplatte 150 befestigt und weist in etwa eine dreieckige Formgebung auf, wobei der Messerkörper mit seiner Dreiecksgrundseite auf der Befestigungsplatte 150 aufsitzt.

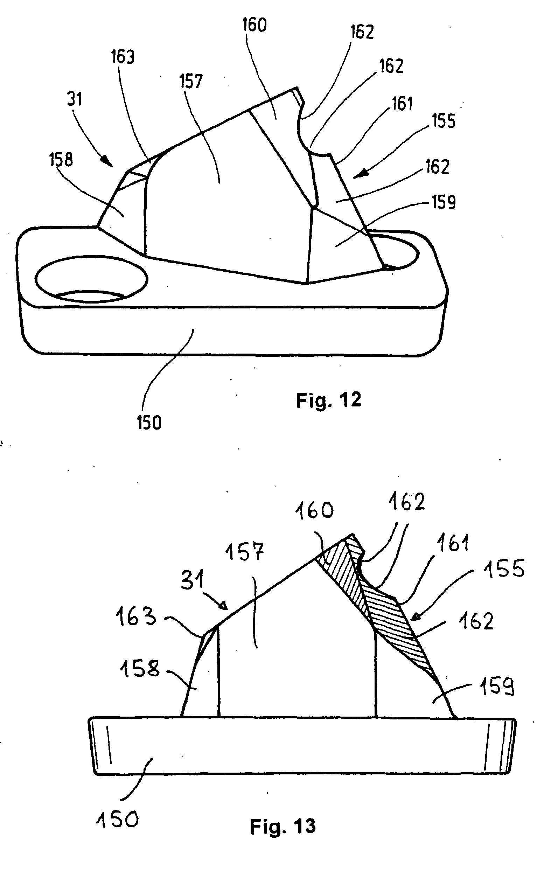

Die eine Seitenwandfläche 156 des Messerkörpers 155 ist bogenförmig nach innen gewölbt (Fig. 10), während die andere Seitenwandfläche 157 plan verlaufend ist (Fig. 11). Diese Seitenwandfläche 157 weist zwei zur Seitenwandfläche abgewinkelte Seitenabschnittsflächen 158, 159 sowie eine im oberen Spitzenbereich des Messerkörpers 155 liegende obere Abschnittsfläche 160 auf, die unter Ausbildung einer Schneidkante 161 mit einer messerartigen eingezogenen Reißkante 162 in eine spitz zulaufende Schneidfläche 162 übergeht (Fig. 12). Die andere sich vom Spitzenbereich des Messerkörpers 155 zur seitlichen Abschnittsfläche 158 erstreckende Seitenkante ist als Schneidkante und Schneidfläche 163 ausgebildet, wobei die eingezogene Reißkante 162 als zweiseitig angeschliffene Einziehung ausgebildet ist.

Aufgrund der speziellen Profilierung des Messerkörpers 155 ist ein Reißmesser 31 geschaffen, das aufgrund verschiedener Flächenanschliffe Schneid- und Reißkanten aufweist, die eine effektive Zerkleinerung des Hygienemülls ermöglichen. Die geometrische Anordnung der Reißmesser 31 auf der Messerscheibe 30 ist so gewählt, dass sich eine optimale Verwirbelung in Arbeits- und Trennrichtung der Messerscheibe 31 ergibt.

Zur Entlüftung ist der Behälter 20 mit einem selbstnachfüllenden Geruchsverschluss 50 versehen (Fig. 2).

Die Steuerung des Zulaufs für die Waschflüssigkeit WF und der Dosierpumpen 28', 29', 129' für die Hygieneflüssigkeit und für die Chemikalie, die Steuerung für die Antriebseinreichung 35 für die Messerscheibe 30 sowie die Steuerungen für die Ableiteinrichtung 165, die Verdichterschnecke 60 und die Pumpen sind in einem Programmschaltwerk zusammengefasst oder werden vermittels einer frei programmierbaren Einrichtung vorgenommen.

## Patentansprüche

1. Vorrichtung zur Vor-Ort-Entsorgung von Hygienemüll, wie Inkontinenz-Artikel aus einem Gewebevlies, einer saugfähigen Zellstoffschicht mit in die Zellstoffschicht eingebettetem Gel oder saugfähigen Granulat, einer einseitigen Außenhülle aus Kunststoff und aus Klett/Klebestreifen, Gummibändern als Verschluss und Haltemittel, wobei der Hygienemüll mechanisch zerkleinert und in einer Waschflüssigkeit wenigstens zum Teil aufgelöst, die so erhaltene Flüssigkeit vom verbleibenden Rest des zerkleinerten Hygienemülls getrennt, die Flüssigkeit einem Abflusskanal zugeführt und der verbleibende Rest des zerkleinerten Hygienemülls entwässert sowie getrennt entsorgt wird, wobei die Vorrichtung (10) aus einem Gehäuse (11) besteht, in dem ein feststehender, trommelartiger Behälter (20) mit waagerechter Mittelachse (MA) und mit einer Einfüllöffnung (25) für den Hygienemüll sowie mit einer Zuleitung (28) geeignet für dosierte Waschflüssigkeit (WF), einer Zuleitung (29) geeignet für eine dosierte Hygieneflüssigkeit (HF) zum Unterdrücken von Gerüchen und zur Desinfektion und einer Zuleitung (129) geeignet für dosierte Chemikalien in pulvrigem oder flüssigem Zustand zum Aufbereiten der Superabsorber, wobei im Bodenbereich des Behälters (20) eine in den Behälterkörper (20) integrierte Ableiteinrichtung (165), für den Abtransport des zerkleinerten, mit Waschflüssigkeit durchsetzten Hygienemülls aus den Bodenbereich des Behälters vorgesehen ist, in dessen Innenraum (27) im Bereich einer seiner beiden Seitenwände (21; 22) eine umlaufend, antreibbare, senkrechte Messerscheibe (30) mit zum Innenraum (27) des Behälters (20) gerichteten Reismessern (31) zum Aufreißen und Zerkleinern des Hygienemülls angeordnet ist und eine sich an die Ableiteinrichtung (165) anschließende, in einem etwa rohrförmigen Gehäuse (61) angeordnete Verdichterschnecke (60), wobei die Ableiteinrichtung (165) bis in den bodenseitigen Bereich der Verdichterschnecke (60) geführt ist, angeordnet sind, und ein Programmschaltwerk oder eine frei programmierbare Einrichtung zur Steuerung der dosierten Zuläufe für die Waschflüssigkeit, Hygieneflüssigkeit und Chemikalien, der Messerscheibe sowie der Verdichterschnecke vorgesehen ist,
**dadurch gekennzeichnet,**
**dass** die Ableiteinrichtung (165) für das Zerkleinerungsprodukt im Bodenbereich des Behälters (20) angeordnet und in dessen Behälterkörper integriert ist und in Behälterlängsrichtung verlaufend ist, dass die im Bodenbereich des Behälters (20) angeordnete und in dessen Behälterkörper integrierte sowie in Behälterlängsrichtung verlaufende Ableiteinrichtung (165) als Ableitrinne (65) mit in Ableitrichtung für das Zerkleinerungsprodukt verlaufender Neigung ausgebildet ist, an die sich das Gehäuse (61) mit der Verdichterschnecke (60) anschließt, die mit einem im Innenraum (62) des Gehäuses (61) der Verdichterschecke angeordneten und sich in Verdichterschneckenlängsrichtung erstreckenden Schersiebblech (70) zum Trennen des zerkleinerten, Feststoffkomponenten enthaltenden Hygienemülls von der Waschflüssigkeit mit den in dieser gelösten Bestandteilen des Hygienemülls eine Funktionseinheit bildet, bei der die Verdichterschnecke (60) und das Schersiebblech (70) scherenartig zusammenwirkend sind, angeordnet ist, wobei das Schersiebblech (70) aus einem gewölbten plattenförmigen Siebkörper (70) mit einer teilkreisförmigen Wölbung besteht, deren Radius dem Außenradius der Verdichterschnecke (60) entspricht um ein verstopfen des Schersiebbleches zu vermeiden wobei im oberen Bereich (61 b) des Gehäuses (61) mit der Verdichterschnecke (60) eine Verdichterdüse (100) mit einem sich nach oben verjüngenden Abschnitt (100a) zum Abtrennen von Restflüssigkeit ausgebildet ist, der über eine Verbindungsleitung mit der Ableitung (80) für die Flüssigkeit aus dem Gehäuse (61) zu einem Abwasserkanal (85) verbunden ist, wobei über eine Ableitung (80) vermittels einer Pumpe (81) die Waschflüssigkeit (WF) mit den in dieser gelösten Bestandteilen des Hygienemülls einem Abwasserkanal (85) zuführbar ist und wobei im oberen Bereich des Gehäuses (61) mit der Verdichterschnecke (60) der von der Flüssigkeit befreite Rest des zerkleinerten und feste Bestandteile aufweisenden Hygienemülls einem Sammelbehälter (95) zuführbar ist.

2. Vorrichtung nach Anspruch 1,
**dadurch gekennzeichnet,**
**dass** der Innenraum (27) des Behälters (20) mit einem Kaltwasserzulauf (28) verbunden ist.

3. Vorrichtung nach einem der Ansprüche 1 oder 2,
**dadurch gekennzeichnet,**
**dass** der trommelartige Behälter (20) aus einem oberen zylindrischen Behälterkörper (20a) besteht, der bodenseitig in einen sich verjüngenden Abschnitt (20b) übergeht, der die Ableitrinne (65) bildet.

4. Vorrichtung nach einem der Ansprüche 1 bis 3,
**dadurch gekennzeichnet,**
**dass** das Schersiebblech (70) als in das Gehäuse (61) mit der Verdichterschnecke (60) einsetzbarer Einsatzkörper ausgebildet ist, wobei die gewölbte Siebfläche (70a) abstandslos zur Umlauffläche der Verdichterschnecke (60) liegend angeordnet ist.

5. Vorrichtung nach einem der Ansprüche 1 bis 4,
**dadurch gekennzeichnet,**
**dass** auf der dem Innenraum (27) des Behälters (20) zugekehrten Wandfläche der Messerscheibe (30) eine über die Scheibenfläche verteilt angeordnete Anzahl von Reißmessern (31) vorgesehen ist.

6. Vorrichtung nach einem der Ansprüche 1 bis 5,
**dadurch gekennzeichnet,**
**dass** die Länge des Behälters (20) in etwa dem Durchmesser der kreisförmigen Stirnwände (21, 22) des zylindrischen Behälterkörpers (20a) des Behälters (20) entspricht, wobei der Durchmesser der Messerscheibe (30) in etwa dem Durchmesser der Stirnwände (21, 22) im Bereich oberhalb der Ableitrinne (65) des Behälters (20) entspricht.

7. Vorrichtung nach einem der Ansprüche 1 bis 6,
**dadurch gekennzeichnet,**
**dass** der Behälter (20) in dem Rahmen (12) des Gehäuses (11) der Vorrichtung (10) feststehend, also nicht rotierend, angeordnet ist.

8. Vorrichtung nach Anspruch 7,
**dadurch gekennzeichnet,**
**dass** der Behälter (20) in dem Rahmen (12) des Gehäuses (11) federnd-elastisch gelagert ist.

9. Vorrichtung nach einem der Ansprüche 1 bis 8,
**dadurch gekennzeichnet,**
**dass** die Behälterseitenwand (23) bodenseitig in einen konisch sich nach unten verjüngenden Abschnitt übergeht, der in die Ableitrinne (65) mündet.

10. Vorrichtung nach einem der Ansprüche 1 bis 9,
**dadurch gekennzeichnet,**
**dass** jedes Reißmesser (31) für eine effektive Zerkleinerung des Hygienemülls einen optimierten Messerschliff aufweist und aus einer in etwa rechteckförmigen Befestigungsplatte (150) und aus einem senkrecht auf der Befestigungsplatte (150) stehend angeordneten und diagonal zu dieser verlaufenden platten- und in etwa dreieckförmigen Messerkörper (155) besteht, dessen eine Seitenwandfläche (156) bogenförmig nach innen gewölbt ist, wobei die andere Seitenwandfläche (157) plan verlaufend ist und zwei zur Seitenwandfläche (157) abgewinkelte Seitenabschnitte (158, 159) sowie eine im oberen Spitzenbereich des Messerkörpers (155) liegende obere abgewinkelte Abschnittsfläche (160) aufweist, die unter Ausbildung einer Schneidkante (161) mit einer messerartigen eingezogenen Reißkante (162) in eine spitz zulaufende Schneidfläche (162) übergeht, wobei die andere vom Spitzenbereich des Messerkörpers (155) zur seitlichen Abschnittsfläche (158) erstreckende Seitenkante als Schneidkante und Schneidfläche (163) ausgebildet ist, wobei die eingezogene Reißkante (162) als zweiseitig angeschliffene Einziehung ausgebildet ist.

11. Vorrichtung nach einem der Ansprüche 1 bis 10,
**dadurch gekennzeichnet,**
**dass** der Behälter (20) zur Entlüftung mit einem selbstnachfüllenden Geruchsverschluss (50) versehen ist.

## Claims

1. Device for the in situ disposal of hygiene waste such as incontinence articles made of a nonwoven fabric, of an absorbent cellulose layer with gel embedded into the cellulose layer or absorbent granulates, an one-sided outer envelope made of plastics and of Velcro/adhesive strips, rubber bands as closure and retaining means, whereby the hygiene waste is mechanically disintegrated and is dissolved at least partially in a washing liquid, the thus obtained liquid is separated form the remaining rest of the disintegrated hygiene waste, the liquid is fed to a discharge duct and the remaining rest of the disintegrated hygiene waste is drained as well as separately disposed of, whereby the device (10) consists of a housing (11) in which a stationary drum-type container (20) is provided with a horizontal central axis (MA) and with a filling opening (25) for the hygiene waste as well as with a supply duct (28) appropriate for a metered washing liquid (WF), a supply duct (29) appropriate for a metered sanitary liquid (HF) for suppressing odours and for disinfection and a supply duct (129) appropriate for metered chemicals in powdered or liquid state for treating the superabsorbers, whereby a discharge device (165), integrated in the container body (20), is provided in the bottom area of the container (20) for carrying away the disintegrated hygiene waste mixed with washing liquid from the bottom area of the container, container in the inner space (27) of which a rotatably drivable vertical knives disk (30) with shearing knives (31) directed to the inner space (27) of the container (20) for tear opening and disintegrating the hygiene waste is placed in the area of one of its two side walls (21; 22) and a compressor screw (60), following the discharge device (165), placed in an approximately tubular housing (61), whereby the discharge device (165) is guided into the bottom-sided area of the compressor screw (60) and whereby a program switching device or a free programmable device is provided for the control of the metered supplies for the washing liquid, the sanitary liquid and for the chemicals, of the knives disk as well as of the compressor screw,
**characterized in**
**that** the discharge device (165) for the disintegrated product is placed in the bottom area of the container (20) and is integrated in the container body thereof and is in container longitudinal direction, that the discharge device (165) placed in the bottom area of the container (20) and integrated in the container body thereof as well as running in container longitudinal direction is configured as a discharge duct (65) with an incline in discharge direction for the disintegrated product, duct which is followed by the housing (61) with the compressor screw (60) which forms a functional unit with a shear sieve steel metal (70) placed in the inner space (62) of the housing (61) of the compressor screw and extending in the longitudinal direction of the compressor screw for separating the hygiene waste containing the disintegrated solid components from the washing liquid with the constituents of the hygiene waste dissolved therein, unit for which the compressor screw (60) and the shear sieve steel metal (70) have a shear-type combined action, whereby the shear sive steel metal (70) is made of a curved plate-shaped sieve body (70) with a partially circular vault, the radius of which corresponds to the outer radius of the compressor screw (60) in order to avoid an obstruction of the shear sieve steel metal, whereby a compressor nozzle (100) with an upwards tapering section (100a) for separating rest liquid is configured in the upper area (61 b) of the housing (61) with the compressor screw (60), this nozzle being connected over a connecting duct with the drain (80) for the liquid from the housing (61) to a waste water duct (85), whereby the washing liquid (WF) with the constituents of the hygiene waste dissolved therein can be fed over a drain (80) by means of a pump (81) to a waste water duct (85) and whereby the rest of the disintegrated hygiene waste which has solid constituents freed from the liquid can be fed to a collecting receiver (95) in the upper area (61 b) of the housing (61) with the compressor screw (60),

2. Device according to claim 1,
**characterized in that** the inner space (27) of the container (20) is connected with a cold water supply (28).

3. Device according to any of the claims 1 or 2,
**characterized in**
**that** the drum-type container (20) is made of an upper cylindrical container body (20a) which is converted on the bottom side into a tapering section (20b) which forms the discharge duct (65).

4. Device according any of the claims 1 to 3,
**characterized in**
**that** the shear sieve sheet metal (70) is configured as an insert body which can be placed into the housing (61) with the compressor screw (60), whereby the vaulted sieve surface (70a) is placed lying without being spaced from the peripheral surface of the compressor screw (60).

5. Device according to any of the claims 1 to 4,
**characterized in**
**that** a number of shearing knives (31) which is placed distributed over the disk surface is provided on the wall surface of the knives disk (30) which is turned to the inner space (27) of the container (20).

6. Device according to any of the claims 1 to 5,
**characterized in**
**that** the length of the container (20) corresponds approximately to the diameter of the circular front walls (21, 22) of the cylindrical container body (20a) of the container (20), whereby the diameter of the knives disk (30) corresponds approximately to the diameter of the front walls (21, 22) in the area above the discharge duct (65) of the container (20).

7. Device according to any of the claims 1 to 6,
**characterized in**
**that** the container (20) is placed stationary, thus not rotatable, in the frame (12) of the housing (11) of the device (10).

8. Device according to claim 7,
**characterized in**
**that** the container (20) is supported elastically in the frame (12) of the housing (11).

9. Device according to any of the claims 1 to 8,
**characterized in**
**that** the container side wall (23) is converted at the bottom side into a conically downwards section which ends into the discharge duct (65).

10. Device according to any of the claims 1 to 9,
**characterized in**
**that** each shearing knife (31) has an optimized knife polished surface for an effective disintegration of the hygiene waste and is made of an approximately rectangular fixing plate (150) and of a plate-shaped and approximately triangular knife body (155) placed upright on the fixing plate (150) and running diagonally with respect to the fixing plate, knife body the one side wall surface (156) of which is curved inwards arc-shaped, whereby the other side wall surface (157) is plane and has two side sections (158, 159) bent off to the side wall surface (157) as well as an upper bent-off section surface (160) situated in the upper tip area of the knife body (155) which is converted to a tapering cutting surface (162) by forming a cutting edge (161) with a knife-type reduced tearing edge (162), whereby the other side edge extending from the tip area of the knife body (155) to the side section surface (158) is configured as a cutting edge and cutting surface (163), whereby the reduced tearing edge (162) is configured as a two-sided polished taper.

11. Device according to any of the claims 1 to 10,
**characterized in**
**that** the container (20) is provided with a self-filling air trap (50) for aeration.

## Revendications

1. Dispositif pour l'élimination sur place des déchets d'articles hygiéniques, tels que des articles d'incontinence constitués par un tissu non-tissé, une couche de cellulose absorbante avec du gel incorporé à la couche de cellulose ou des granulés absorbants, une enveloppe extérieure sur un côté en matière synthétique et des bandes adhésives/Velcro, des bandes de caoutchouc comme fermeture et moyen de retenue, les déchets d'articles hygiéniques étant fragmentés mécaniquement et étant dissous au moins partiellement dans un liquide de lavage, le liquide ainsi obtenu étant séparé du reste des déchets d'articles hygiéniques résiduels fragmentés, le liquide étant amené à un conduit d'évacuation et les déchets d'articles hygiéniques résiduels fragmentés étant drainés ainsi qu'évacués séparément, le dispositif (10) étant constitué par un boîtier (11) dans lequel un récipient fixe de type tambour (20) est prévu avec un axe médian horizontal (MA) et avec un orifice de remplissage (25) pour les déchets d'articles hygiéniques ainsi qu'avec une conduite d'amenée (28) qui convient pour un liquide de lavage dosé (WF), une conduite d'amenée (29) qui convient pour un liquide hygiénique dosé (HF) pour supprimer les odeurs et pour la désinfection et une conduite d'amenée (129) pour des produits chimiques dosés à l'état poudreux ou liquide pour traiter les superabsorbants, un dispositif d'évacuation (165) pour l'évacuation des déchets d'articles hygiéniques fragmentés chargés de liquide de lavage à partir de la zone du fond du récipient qui est intégré au corps du récipient (20) étant prévu dans la zone du fond du récipient (20), à l'intérieur (27) duquel un disque de couteaux (30) vertical, qui peut être entraîné en rotation, avec des couteaux déchireurs (31) dirigés vers l'espace intérieur (27) du récipient (20) pour arracher et fragmenter les déchets d'articles hygiéniques est placé et une vis sans fin de compression (60) qui suit le dispositif d'évacuation (165) étant placée dans un boîtier à peu près tubulaire (61), le dispositif d'évacuation (165) étant guidé jusque dans la zone côté fond de la vis sans fin de compression (60), et un dispositif de commutation à programme ou un dispositif librement programmable étant prévu pour la commande des alimentations dosées en liquide de lavage, liquide hygiénique et produits chimiques, du disque de couteaux ainsi que de la vis sans fin de compression,
**caractérisé en ce**
**que** le dispositif d'évacuation (165) pour le produit de fragmentation est placé dans la zone du fond du récipient (20) et est intégré dans le corps de celui-ci et est placé dans le sens longitudinal du récipient, que le dispositif d'évacuation (165), placé dans la zone du fond du récipient (20) et intégré dans le corps de ce récipient ainsi que placé dans le sens longitudinal du récipient, est configuré comme un conduit d'évacuation (65) avec une inclinaison dans le sens d'évacuation pour le produit de fragmentation, conduit auquel se rattache le boîtier (61) avec la vis sans fin de compression (60) qui forme une unité fonctionnelle avec une tôle de criblage cisaillante (70) placée dans l'espace intérieur (62) du boîtier (61) de la vis sans fin de compression et qui s'étend dans le sens longitudinal de la vis sans fin de compression, pour séparer les déchets d'articles hygiéniques fragmentés qui contiennent des composants solides du liquide de lavage avec les constituants des déchets d'articles hygiéniques dissous dans celui-ci, unité fonctionnelle pour laquelle la vis sans fin de compression (60) et la tôle de criblage cisaillante (70) ont une action conjointe de type cisailllante, la tôle de criblage cisaillante (70) étant constituée par un corps de criblage en forme de plaque voûtée (70) avec une voussure partiellement circulaire dont le rayon correspond au rayon extérieur de la vis sans fin de compression (60) pour empêcher une obstruction de la tôle de criblage cisaillante, une tuyère de compresseur (100) avec une section s'effilant vers le haut (100a) étant configurée dans la zone supérieure (61 b) du boîtier (61) avec la vis sans fin de compression (100) pour séparer le liquide résiduel, section qui est reliée par une conduite de liaison à la conduite d'évacuation (80) pour le liquide à partir du boîtier (61) vers un canal d'eaux usées (85), le liquide de lavage (WF) avec les constituants des déchets d'articles hygiéniques qui y sont dissous pouvant être amené à un canal d'eaux usées (85) par une conduite d'évacuation (80) au moyen d'une pompe (81) et le reste des déchets d'articles hygiéniques fragmentés et présentant des constituants solides, libéré du liquide, pouvant être amené à un récipient collecteur (95) dans la zone supérieure (61 b) du boîtier (61) avec la vis sans fin de compression (60).

2. Dispositif selon la revendication 1,
**caractérisé en ce**
**que** l'espace intérieur (27) du récipient (20) est relié à une alimentation en eau froide (28).

3. Dispositif selon l'une des revendications 1 ou 2,
**caractérisé en ce**
**que** le récipient de type tambour (20) est constitué par un corps de récipient cylindrique supérieur (20a) qui se convertit côté fond en une section s'effilant (20b) qui forme le conduit d'évacuation (65).

4. Dispositif selon l'une des revendications 1 à 3,
**caractérisé en ce**
**que** la tôle de criblage cisaillante (70) est configurée comme un corps d'insertion qui peut être placé dans le boîtier (61) avec la vis sans fin de compression (60), la surface criblante voûtée (70a) étant placée à plat sans distance par rapport à la surface circonférentielle de la vis sans fin de compression (60).

5. Dispositif selon l'une des revendications 1 à 4,
**caractérisé en ce**
**qu'**un certain nombre de couteaux déchireurs (31) placé en étant réparti sur la surface du disque est prévu sur la surface de la paroi du disque de couteaux (30) qui est tournée vers l'espace intérieur (27) du récipient (20).

6. Dispositif selon l'une des revendications 1 à 5,
**caractérisé en ce**
**que** la longueur du récipient (20) correspond approximativement au diamètre des parois frontales circulaires (21, 22) du corps de récipient cylindrique (20a) du récipient (20), le diamètre du disque de couteaux (30) correspondant approximativement au diamètre des parois frontales (21, 22) dans la zone au-dessus du conduit d'évacuation (65) du récipient (20).

7. Dispositif selon l'une des revendications 1 à 6,
**caractérisé en ce**
**que** le récipient (20) est placé fixe dans le cadre (12) du récipient (11) du dispositif (10), donc non rotatif.

8. Dispositif selon la revendication 7,
**caractérisé en ce**
**que** le récipient (20) est positionné élastique dans le cadre (12) du boîtier (11).

9. Dispositif selon l'une des revendications 1 à 8,
**caractérisé en ce**
**que** la paroi latérale du récipient (23) se convertit côté fond en une section qui s'effile coniquement vers le bas qui débouche dans le conduit d'évacuation (65).

10. Dispositif selon l'une des revendications 1 à 9,
**caractérisé en ce**
**que** chaque couteau déchireur (31) présente, pour une fragmentation efficace des déchets d'articles hygiéniques, un affûtage optimalisé et est constitué par une plaque de fixation approximativement rectangulaire (150) et par un corps de couteau en forme de plaque et approximativement triangulaire (155), placé perpendiculaire sur la plaque de fixation (150) et allant dans le sens diagonal par rapport à celle-ci, corps de couteau dont l'une des surfaces de parois latérales (156) est voûtée vers l'intérieur de forme arquée, l'autre surface de paroi latérale (157) étant plane et présentant deux sections latérales (158, 159) coudées vers la surface de paroi latérale (157) ainsi qu'une surface de section coudée supérieure (160), située dans la zone supérieure de la pointe du corps de couteau (155), qui se convertit en une surface de coupe (162) se terminant en pointe en configurant une arête de coupe (161) avec une arête d'arrachage (162) rentrée de type couteau, l'autre arête latérale qui s'étend de la zone de la pointe du corps de couteau (155) vers la surface de section latérale (158) étant configurée comme une arête de coupe et surface de coupe (163), l'arête d'arrachage (162) rentrée étant configurée comme un rétrécissement affûté des deux côtés.

11. Dispositif selon l'une des revendications 1 à 10,
**caractérisé en ce**
**que** le récipient (20) est pourvu d'un siphon inodore auto-remplissant (50) pour l'aération.
